# EUROPÄISCHE PATENTSCHRIFT

(11) **EP 4 118 350 B1**
(45) Veröffentlichungstag und Bekanntmachung des Hinweises auf die Patenterteilung: **20.12.2023**
(21) Anmeldenummer: 21711524.5
(22) Anmeldetag: 09.03.2021
(51) Int. Cl.: F16C 17/14, F16C 33/66, F16C 33/74

(54) **LAGERANORDNUNG FÜR EINE WELLE EINES TURBOKOMPRESSORS**
BEARING ARRANGEMENT FOR A SHAFT IN A TURBOCOMPRESSOR
ENSEMBLE PALIER POUR UN ARBRE DANS UN TURBOCOMPRESSEUR

(30) Priorität: 12.03.2020 DE 102020203204
(43) Veröffentlichungstag der Anmeldung: 18.01.2023
(73) Patentinhaber: Robert Bosch GmbH, 70442 Stuttgart (DE)
(72) Erfinder: WESSNER, Jochen, 73728 Esslingen (DE); KATZ, Martin, 70469 Stuttgart (DE)
(86) Internationale Anmeldenummer: PCT/EP2021/055892
(87) Internationale Veröffentlichungsnummer: WO 2021/180705

(56) Entgegenhaltungen:
- EP-A2- 0 270 921
- WO-A1-2013/019471
- CN-B- 103 061 859

## Beschreibung

Die Erfindung betrifft eine Lageranordnung für eine Welle eines Turbokompressors, der eine Komponente eines Kathodenkreislaufs eines Brennstoffzellen-Stacks sein kann.

### Stand der Technik

Wasserstoffbasierte Brennstoffzellen gelten als Basis für ein Mobilitätskonzept der Zukunft, da sie nur Wasser emittieren und schnelle Betankungszeiten ermöglichen. Beispielsweise PEM-Brennstoffzellen (PEM engl.:"proton-exchange-membrane"; Protonen-Austausch-Membran) können mit der Kathode der Brennstoffzelle zugeführter Luft mit Sauerstoff als Oxidationsmittel und der Anode der Brennstoffzelle zugeführtem Wasserstoff als Brennstoff in einem elektrokatalytischen Elektrodenprozess betrieben werden, um elektrische Energie mit einem hohen Wirkungsgrad bereitzustellen.

Solche Brennstoffzellen werden typischerweise gestapelt als Brennstoffzellen-Stack in einem Brennstoffzellen-Systemen betrieben. Die der Kathode des Brennstoffzellen-Stacks zugeführte Luft wird mittels eines Turbokompressors verdichtet. Ein gattungsgemäßer Turbokompressor mit einem wasserhydraulischen Lager ist aus der EP 0 270 921 A2 bekannt.

### Offenbarung der Erfindung

Die Lagerung der Antriebswelle eines solchen Turbokompressors wird entweder mit Wälzlagern, mit dem Nachteil einer hohen Reibung und einer entsprechend geringen Lebensdauer oder mit hydrodynamischen Luftlagern, die, wegen der benötigten hohen Genauigkeit, aufwendig zu fertigen sind, umgesetzt. Beide Varianten haben ebenfalls den Nachteil, dass in den Lagern und/oder in der elektrischen Maschine entstehende Wärme nur schlecht abgeführt werden kann.

Entsprechend einem Aspekt wird eine Lageanordnung für eine Welle eines Turbokompressors, eine Verwendung der Lageranordnung, ein Turbokompressor und ein Kathoden Kreislauf eines Brennstoffzellen-Stacks entsprechend den Merkmalen der unabhängigen Ansprüche vorgeschlagen, die zumindest zum Teil die beschriebenen Aufgaben lösen. Vorteilhafte Ausgestaltungen sind Gegenstand der abhängigen Ansprüche sowie der nachfolgenden Beschreibung.

Gemäß einem Aspekt wird eine Lageranordnung für eine Welle eines Turbokompressors mit zumindest einem wasserhydraulischen Lager vorgeschlagen, das eingerichtet ist, eine Welle des Turbokompressors drehbar zu lagern, wobei das wasserhydraulische Lager die Welle an einem Umfang der Welle umschließt, um dazwischen einen Lagerspalt zu bilden. Dabei ist das wasserhydraulische Lager eingerichtet, Wasser durch den Lagerspalt fließen zu lassen, um die Welle wasserhydraulisch zu lagern. Die Lageranordnung weist zwei Dichtungen auf, die eingerichtet sind, den Lagerspalt gegenüber der Welle abzudichten, und die zwei Dichtungen werden außerhalb des Lagerspalts mit Gas des Turbokompressors zum Abdichten des Lagers beaufschlagt.

Ein solcher Turbokompressor weist typischerweise zwei Turbomaschinen auf, die mit einer gemeinsamen Welle mechanisch fest verbunden sind und zwei solcher Lageranordnungen aufweisen können.

Durch die höhere Viskosität von Wasser gegenüber Luft können die Lagergenauigkeiten eines solchen wasserhydraulischen Lagers in einer solchen Lageranordnung deutlich reduziert werden und die Tragfähigkeit des Lagers steigt bei ähnlichen Abmessungen deutlich an.

Die in den Lagern entstehende Wärme kann durch diesen Aufbau bedingt mit dem Wasser abgeführt werden und das Wasser kann auch verwendet werden um die Wärme der elektrischen Maschine abzuführen. Besonders vorteilhaft ist, dass ein Turbokompressor, der in einem System eines Brennstoffzellen-Stacks angeordnet ist, das für das wasserhydraulische Lager notwendige Wasser, beispielsweise durch Kondensation der aus dem Brennstoffzellen-Stack austretenden Luftströmung, leicht bereitstellen kann.

Durch die äußere Beaufschlagung der jeweiligen Dichtung mit Gas des Turbokompressors kann eine größere Dichtheit der Lageranordnung erreicht werden. Dieses Gas steht dabei vorteilhafterweise in einem solchen System automatisch zur Verfügung.

Gemäß einem Aspekt wird vorgeschlagen, dass die jeweilige Dichtung zwei Dichtelemente aufweist, die mit dem Lager und der Welle einen Hohlraum bilden; und wobei das Lager eine Öffnung zwischen den zwei Dichtelementen aufweist, um den Hohlraum mit einem Wassertank fluidmäßig zu verbinden.

Dadurch kann erreicht werden, dass Wasser, das von dem Lagerspalt ein im Lagerspalt angrenzendes Dichtelement passiert, durch die Öffnung auch mit Unterstützung des Gases des Turbokompressors abgeführt werden kann, wodurch das Lager eine höhere Dichtigkeit aufweist. Dies wird zusätzlich durch das Gas des Turbokompressors unterstützt, das an dem, in Bezug auf den Lagerspalt, weiter außenliegenden Dichtelement anliegt. Mit anderen Worten steht die komprimierte Luft des Turbokompressors an der äußeren Seite des jeweiligen außen gelegenen Dichtelementes an, sodass über das außen gelegene Dichtelement Luft als Sperrmedium in den Hohlraum zwischen den Dichtungen strömt. Dieser ist an den Tank angebunden, der auf einem deutlich niedrigeren Druckniveau liegt. Auf diese Weise wird sichergestellt, dass kein Wasser in Bereiche des Arbeitsluftspalts der Antriebsmaschine gelangt.

Gemäß einem Aspekt wird vorgeschlagen, dass außerhalb der zwei Dichtungen jeweils eine Gasdichtung mit einem Zwischenraum zu der jeweiligen Dichtung angeordnet ist, die eingerichtet ist, den Lagerspalt gegenüber der Welle abzudichten und das wasserhydraulische Lager eingerichtet ist, mittels des Zwischenraums die jeweilige Dichtung außerhalb des Lagerspalts mit dem Gas des Turbokompressors zu beaufschlagen.

Mit einer solchen, in Bezug auf den Lagerspalt außerhalb der Dichtung angeordneten, Gasdichtung ist es möglich, die Beaufschlagung der jeweiligen Dichtung mit dem Gas des Turbokompressors besonders wirksam durchzuführen und gegebenenfalls einen Gasdruck aufzubauen.

Gemäß einem Aspekt wird vorgeschlagen, dass der Lagerspalt eingerichtet ist, mit einem Wassertank fluidmäßig verbunden zu werden, um für den Lagerspalt Wasser bereitzustellen.

Durch dieses Wasser in dem Lagerspalt kann das Lager mit der Lageranordnung mit dem wasserhydraulischen Lager drehbar gelagert werden.

Gemäß einem Aspekt wird vorgeschlagen, dass der Wassertank eine Pumpe aufweist, um Wasser von dem Wassertank in den Lagerspalt zu pumpen.

Wenn das wasserhydraulische Lager als hydrostatisches Lager ausgeführt wird, baut eine solche Pumpe den notwendigen Druck in dem Lagerspalt auf. Für ein hydrodynamisches Lager kann eine solche Pumpe beispielsweise zum verschleißarmen Anfahren des Turbokompressors verwendet werden, weil mit der Pumpe ein Anfangsdruck bereitgestellt werden kann.

Gemäß einem Aspekt wird vorgeschlagen, dass das wasserhydraulische Lager ein hydrodynamisches Lager ist, und eingerichtet ist, Wasser für den Lagerspalt selbst anzusaugen.

Vorteilhafterweise benötigt ein hydrodynamisches Lager keinen von außen aufgebrachten Wasserdruck, da es das Wasser selbstständig aus dem Tank ansaugen kann. Dabei wird bei einem hydrodynamischen Lager die Geometrie des Lagers insbesondere in Bezug auf eine Exzentrizität angepasst.

Gemäß einem Aspekt wird vorgeschlagen, dass das aus der Lageranordnung ausfließende Wasser zur Befeuchtung von Luft verwendet wird, die einer Kathode eines Brennstoffzellensystems mittels des Turbokompressors zugeführt wird.

Somit kann das Wasser dem Brennstoffzellensystem wieder zugeführt werden, nachdem es das wasserdynamische Lager der Lageranordnung und/oder gegebenenfalls auch einen Kühlwasserkreislauf des Turbokompressors durchströmt hat.

Gemäß einem Aspekt wird vorgeschlagen, dass das aus der Lageranordnung ausfließende Wasser zur Kühlung von Komponenten eines Brennstoffzellensystems verwendet wird.

Da neben dem Turbokompressor auch Wärme aus anderen Komponenten des Brennstoffzellensystems, wie beispielsweise elektronischen Komponenten, abgeführt werden muss, kann das Wasser auch dafür verwendet werden.

Gemäß einem Aspekt wird vorgeschlagen, dass das Wasser für das hydrodynamische Lager kondensiertes Wasser eines Brennstoffzellen-Systems aufweist.

Das bedeutet vorteilhafterweise, dass das Wasser nicht mitgeführt werden muss, sondern im Betrieb der Brennstoffzelle generiert wird, um beispielsweise zu Kühlzwecken zur Verfügung zu stehen. Dazu kann ein solches Brennstoffzellensystem einen Wasserabscheider, insbesondere am Ausgang der Kathodenseite des Brennstoffzellen-Stacks, vorsehen, wobei das abgeschiedene Wasser des Wasserabscheiders dann einem Wassertank zugeführt werden kann.

Es wird eine Verwendung einer der oben beschriebenen Lageranordnungen zur Lagerung einer Welle eines Turbokompressors vorgeschlagen, wobei der Turbokompressor eine Komponente eines Brennstoffzellensystems ist.

Da in einem solchen Brennstoffzellensystem, wie es oben beschrieben ist, das Wasser im laufenden Betrieb generiert wird, kann ein so gelagerter Turbokompressor hier besonders vorteilhaft eingesetzt werden.

Es wird ein Turbokompressor mit einer Lageranordnung, wie sie oben beschrieben ist, vorgeschlagen, wobei der Turbokompressor einen Flüssigkeits-Kühlkreislauf aufweist, und das dem Lagerspalt zufließende und/oder abfließende Wasser durch den Flüssigkeit-Kühlkreislauf geleitet wird, um Wärme der elektrischen Maschine des Turbokompressors abzuführen.

Das für die hydraulische Lagerung notwendige Wasser kann auf dem Weg zur Lagerstelle durch die thermisch hochbelasteten Bauteile der E-Maschine geführt werden und diese kühlen. Zwischen den Lagerstellen sitzt der Antriebsmotor, dessen Bauteile gekühlt werden müssen. Das für die hydraulische Lagerung notwendige Wasser kann auf dem Weg zur Lagerstelle durch die thermisch hochbelasteten Bauteile der E-Maschine geführt werden und diese kühlen.

Es wird ein Kathodenkreislauf eines Brennstoffzellen-Stacks mit einem oben beschriebenen Turbokompressor und einem Befeuchter zum Befeuchten der Kathodenluft vorgeschlagen, wobei der Kathodenkreislauf eingerichtet ist, das aus der Lageranordnung abfließende Wasser dem Befeuchter zuzuführen.

Der Luft-Massenstrom, den der Verdichter des Turbokompressors fördert, muss befeuchtet und gekühlt werden. Das aus dem wasserhydraulischen Lager austretende Wasser kann diese Aufgabe mit übernehmen.

Das Kathoden-Gas, das der Kathodenseite des Brennstoffzellen-Stacks zugeführt wird, weist ein Oxidationsmittel für die elektrokatalytische Reaktion der Brennstoffzellen im Brennstoffzellen-Stack auf, wobei das Oxidationsmittel insbesondere Sauerstoff bzw. Luft aufweisen kann.

Der Wasserabscheider kann eingerichtet sein, sowohl tröpfchenförmiges Wasser aus dem Kathoden-Gas abzuscheiden als auch gasförmiges Wasser zu kondensieren. Der Wasserabscheider kann insbesondere auch als Kondensator ausgeführt sein oder als eine Kombination aus Wasserabscheider und Kondensator ausgeführt sein. Der Begriff Wasserabscheider umfasst somit sowohl den Begriff Wasserabscheider an sich als auch den Begriff eines Kondensators.

Mit einem so ausgeführten Wasserabscheider kann das Produkt-Wasser des in unterschiedlichen Betriebspunkten betriebenen Brennstoffzellen-Stacks abgeschieden werden. Insbesondere, wenn das austretende Kathodengas mit Wasser nicht gesättigt ist, vollständig gesättigt ist und auch wenn es zusätzlich Wassertropfen, zum Beispiel in Form von Nebel oder schon an anderer Stelle des Systems kondensiertes Wasser, enthält, kann dieses Wasser abgeschieden werden. Dabei kann ein solcher Wasserabscheider einen Zyklon aufweisen und/oder einen Kondensator.

Mit anderen Worten ist der Wasser-Abscheider eingerichtet, einen Gasstrom von einem Elektrodenraum des Brennstoffzellen-Stacks aufzunehmen und Wasser beim Durchleiten des Gasstroms durch den Wasser-Abscheider aus dem Gasstrom abzuscheiden, wobei der Gasstrom Produktwasser aus einem Elektrodenraum des Brennstoffzellen-Stacks mitführt.

Somit kann das Produktwasser, das wie beschrieben in großen Maßen beim Betrieb des Brennstoffzellen-Stacks anfällt, für weitere Zwecke verwendet werden,

Gemäß einem Aspekt wird vorgeschlagen, dass eine mobile Plattform einen Turbokompressor mit einer Lageranordnung, wie sie oben beschrieben wurde, aufweist.

Eine mobile Plattform kann ein zumindest teilweise automatisiertes System sein, das mobil ist, und/oder ein Fahrerassistenzsystem. Ein Beispiel kann ein zumindest teilweise automatisiertes Fahrzeug bzw. ein Fahrzeug mit einem Fahrerassistenzsystem sein. Das heißt, in diesem Zusammenhang beinhaltet ein zumindest teilweise automatisiertes System eine mobile Plattform in Bezug auf eine zumindest teilweise automatisierte Funktionalität, aber eine mobile Plattform beinhaltet auch Fahrzeuge und andere mobile Maschinen einschließlich Fahrerassistenzsysteme. Jedes dieser Systeme kann ein vollständig oder teilweise autonomes System sein.

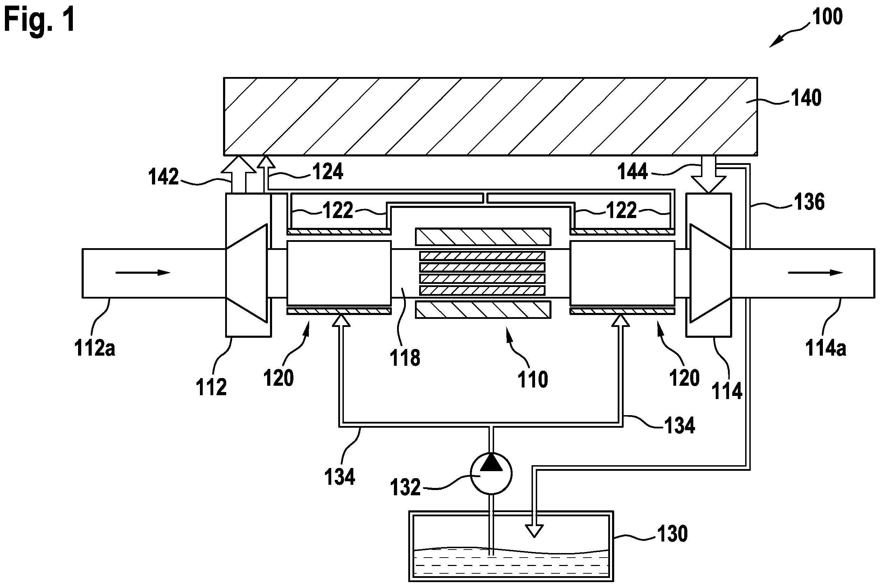

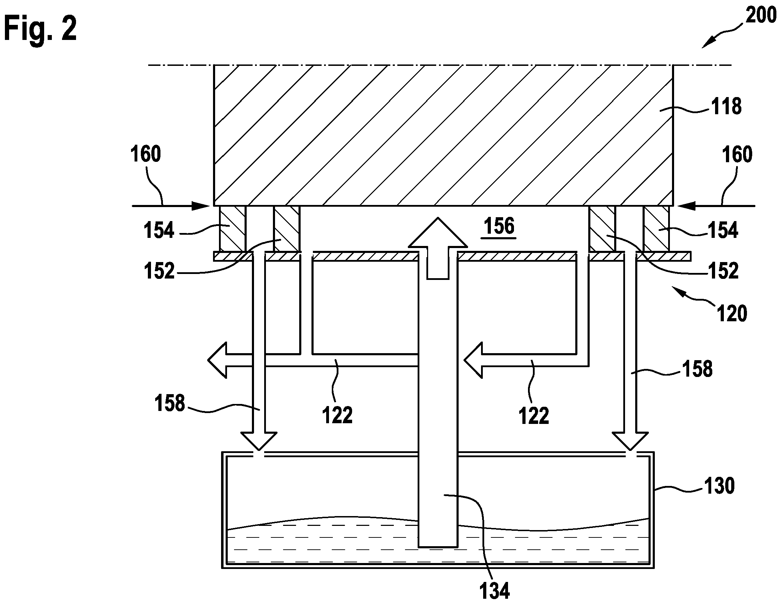

Im Folgenden werden Ausführungsbeispiele der Erfindung anhand der Figuren 1 und 2 näher erläutert. Hierbei zeigt die
- Figur 1: einen Turbokompressor; und
- Figur 2: eine Lageranordnung für einen Turbokompressor;

Die Figur 1 zeigt ein System 100 mit einem Turbokompressor mit wasserhydraulischen Lagern 120, einer Kathodenseite eines Brennstoffzellen-Stacks 140 und einem Wassertank 130. Der Turbokompressor weist einen Flüssigkeits-Kühlkreislauf 122 auf, dem das, dem Lagerspalt zufließende und/oder abfließende, Wasser zugeführt werden kann, um Wärme der elektrischen Maschine des Turbokompressors abzuführen.

Die Kathodenseite des Brennstoffzellen-Stacks 140 wird an ihrem Eingangsanschluss über die Kompressorstufe 112 des Turbokompressors mit Luft 142 versorgt und am Austrittsanschluss der Kathodenseite des Brennstoffzellen-Stacks 140 kann der Luftmassenstrom 144 über eine Turbine 114 des Turbokompressors Energie zurückgewonnen werden, da beide Turbomaschinen auf einer gemeinsamen Welle 118 angeordnet sind.

Die gemeinsame Welle 118 des Turbokompressors wird mit zwei wasserhydraulischen Lagern 120 gelagert. Zwischen den Lagern ist ein elektrischer Antriebsmotor 110 angeordnet, dessen Komponenten im Betrieb Wärme generieren, die abgeführt werden muss.

Das Wasser aus dem Wassertank 130 kann mittels einer Pumpe 132 über fluiddurchgängige Verbindungsleitungen 134 den wasserhydraulischen Lagern 120 zugeführt werden. Mittels dieser Pumpe 132 wird bei einem hydrostatischen wasserhydraulischen Lager 120 Druck in dem Lagerspalt des Lagers, das die Welle an einem Umfang umschließt, aufgebaut, sodass die Welle 118 des Turbokompressors drehbar gelagert wird.

Das in das Lager 120 einfließende Wasser durchströmt das Lager und fließt durch den Flüssigkeits-Kühlkreislauf 122, den der Turbokompressor zur Kühlung aufweist, und kann dann verwendet werden, um die der Kathodenseite 140 des Brennstoffzellen-Stacks zugeführte Luft, mittels einer Zuführung 124, zuzuführen. Dabei kann diese Zuführung 124 das Wasser einem Befeuchter bereitstellen, der in der Zuführung von Luft für die Kathodenseite 41 des Brennstoffzellen-Stacks angeordnet ist. Kanäle des Flüssigkeits-Kühlkreislaufs des Turbokompressors können auch auf der Druckseite der Lageranordnung angeordnet sein. Das für die wasserhydraulischen Lager verwendete Wasser, das dem Wassertank 130 entnommen werden kann, kann kondensiertes Wasser aus dem Luftmassenstrom 144 des Austrittsanschlusses der Kathodenseite des Brennstoffzellen-Stack 140 aufweisen. Dazu kann ein Kondensor in diesem Luftmassenstrom 144 angeordnet sein und dieses kondensierte Wasser kann über eine fluiddurchgängige Leitung 136 in den Wassertank 130 geleitet werden.

Die Figur 2 skizziert Details der Lageranordnung 120 in einem System 200, das neben der Lageranordnung 120 die Welle 118 des Turbokompressors und den Wassertank 130 aufweist.

Hierbei wird das Wasser des Wassertanks 130 mittels einer fluiddurchlässigen Verbindungsleitung 134 in den Lagerspalt 156 geleitet, um dort entweder durch die rotierende Welle 118, im Falle eines hydrodynamischen Lagers, oder mittels einer Pumpe 132, die in der Verbindungsleitung 134 angeordnet ist, den für die Lagerung der Welle 118 des Turbokompressors notwendigen Druck aufzubauen. Dieses Wasser, dass durch den Lagerspalt 156 geleitet wird, kann über die Anschlussleitung 122, die mit Öffnungen des Lagers im Bereich des Lagerspaltes 156 verbunden sind, wie oben beschrieben, entweder der Kathoden-Luftströmung 142 und/oder dem Flüssigkeits-Kühlkreislauf 122 des Turbokompressors zugeführt werden.

Der Lagerspalt 156 wird mittels zwei Dichtungen, die jeweils zwei Dichtelemente 152, 154 aufweisen, abgedichtet. Dabei wird das jeweils weiter außen gelegene Dichtelement 154 mit Gas des Turbokompressors beaufschlagt, um das Lager abzudichten.

Zwischen den beiden Dichtelementen 152, 154, die einen gegenseitigen Abstand aufweisen, um einen Hohlraum mit der Welle 118 zu bilden, ist eine Öffnung vorgesehen, die mit einer fluiddurchlässigen Verbindung 158 etwaiges in diesen Hohlraum eintretendes Wasser in den Wassertank 130 leitet. Da nämlich das außen gelegene Dichtelement 154 der jeweiligen Dichtung mit Gas des Turbokompressors beaufschlagt ist, wird Wasser, das das weiter innen gelegene Dichtelement 152 passiert, durch die Öffnung des Hohlraums zwischen den beiden Lichtelementen 152, 154 in den Wassertank 130 geleitet. Dies führt zu einer besonders guten Abdichtung der Lageranordnung, was insbesondere wichtig ist damit das Wasser des wasserhydraulischen Lagers nicht in die Turbine gelangt, um Tropfenschlag zu vermeiden.

## Patentansprüche

1. Lageranordnung (200) für eine Welle (118) eines Turbokompressors, mit:
zumindest einem wasserhydraulischen Lager (120), das eingerichtet ist, eine Welle (118) des Turbokompressors drehbar zu lagern, wobei das wasserhydraulische Lager (120) die Welle (118) an einem Umfang der Welle (118) umschließt, um dazwischen einen Lagerspalt (156) zu bilden; und wobei das wasserhydraulische Lager (120) eingerichtet ist, Wasser durch den Lagerspalt (156) fließen zu lassen, um die Welle (118) wasserhydraulisch zu lagern, **dadurch gekennzeichnet, dass** die Lageranordnung zwei Dichtungen aufweist, die eingerichtet sind, den Lagerspalt (156) gegenüber der Welle (118) abzudichten; und wobei die zwei Dichtungen außerhalb des Lagerspalts (156) mit Gas des Turbokompressors zum Abdichten des Lagers (120) beaufschlagt sind.

2. Lageranordnung (200) gemäß Anspruch 1, wobei die jeweilige Dichtung zwei Dichtelemente (152, 154) aufweist, die mit dem Lager (120) und der Welle (118) einen Hohlraum bilden; und wobei das Lager (120) eine Öffnung zwischen den zwei Dichtelementen (152, 154) aufweist, um den Hohlraum mit einem Wassertank (130) fluidmäßig zu verbinden.

3. Lageranordnung (200) gemäß einem der vorhergehenden Ansprüche, wobei außerhalb der zwei Dichtungen jeweils eine Gasdichtung mit einem Zwischenraum zu der jeweiligen Dichtung angeordnet ist, die eingerichtet ist, den Lagerspalt (156) gegenüber der Welle (118) abzudichten und das wasserhydraulische Lager (120) eingerichtet ist, mittels des Zwischenraums die jeweilige Dichtung außerhalb des Lagerspaltes (156) mit dem Gas des Turbokompressors zu beaufschlagen.

4. Lageranordnung (200) gemäß einem der vorhergehenden Ansprüche, wobei der Lagerspalt (156) eingerichtet ist, mit einem Wassertank (130) fluidmäßig verbunden zu werden, um für den Lagerspalt (156) Wasser bereitzustellen.

5. Lageranordnung (200) gemäß Anspruch 4, wobei der Wassertank (130) eine Pumpe (132) aufweist, um Wasser von dem Wassertank (130) in den Lagerspalt (156) zu pumpen.

6. Lageranordnung (200) gemäß einem der vorhergehenden Ansprüche, wobei das wasserhydraulische Lager (120) ein hydrodynamisches Lager ist, und eingerichtet ist, Wasser für den Lagerspalt (156) selbst anzusaugen.

7. Lageranordnung (200) gemäß einem der vorhergehenden Ansprüche, wobei das aus der Lageranordnung (200) ausfließende Wasser zur Befeuchtung von Luft verwendet wird, die einer Kathode eines Brennstoffzellensystems mittels des Turbokompressors zugeführt wird.

8. Lageranordnung (200) gemäß einem der vorhergehenden Ansprüche, wobei das aus der Lageranordnung (200) ausfließende Wasser zur Kühlung von Komponenten eines Brennstoffzellensystems verwendet wird.

9. Lageranordnung (200) gemäß einem der vorhergehenden Ansprüche, wobei das Wasser für das hydrodynamische Lager kondensiertes Wasser eines Brennstoffzellensystem aufweist.

10. Verwendung einer Lageranordnung (200) gemäß einem der vorhergehenden Ansprüche, zur Lagerung einer Welle (118) eines Turbokompressors, der eine Komponente eines Brennstoffzellensystems ist.

11. Turbokompressor mit einer Lageranordnung (200) gemäß den Ansprüchen 1 bis 9, wobei der Turbokompressor einen Flüssigkeits-Kühlkreislauf (122) aufweist, und das dem Lagerspalt (156) zufließende und/oder abfließende Wasser durch den Flüssigkeits-Kühlkreislauf (122) geleitet wird, um Wärme der elektrischen Maschine des Turbokompressors abzuführen.

12. Kathodenkreislauf eines Brennstoffzellen-Stacks mit einem Turbokompressor gemäß Anspruch 11, und einem Befeuchter zum Befeuchten der Kathodenluft, wobei der Kathodenkreislauf eingerichtet ist, das aus der Lageranordnung (200) abfließende Wasser dem Befeuchter zuzuführen.

## Claims

1. Bearing arrangement (200) for a shaft (118) in a turbocompressor, having:
at least one water-fed hydraulic bearing (120), which is configured to rotatably support a shaft (118) of the turbocompressor, wherein the water-fed hydraulic bearing (120) encloses the shaft (118) at a circumference of the shaft (118) in order to form a bearing gap (156) therebetween; and wherein the water-fed hydraulic bearing (120) is configured to allow water to flow through the bearing gap (156) in order to support the shaft (118) hydraulically, **characterized in that** the bearing arrangement has two seals,
which are configured to seal the bearing gap (156) with respect to the shaft (118); and wherein gas from the turbocompressor is applied to the two seals outside the bearing gap (156) in order to seal the bearing (120).

2. Bearing arrangement (200) according to Claim 1, wherein the respective seal comprises two sealing elements (152, 154), which define a cavity with the bearing (120) and the shaft (118); and wherein the bearing (120) has an opening between the two sealing elements (152, 154) in order to fluidically connect the cavity to a water tank (130).

3. Bearing arrangement (200) according to either of the preceding claims, wherein a gas seal is arranged outside of each of the two seals, with an interspace relative to the respective seal which is configured to seal the bearing gap (156) with respect to the shaft (118), and the water-fed hydraulic bearing (120) is configured to apply the gas from the turbocompressor to the respective seal outside the bearing gap (156) by means of the interspace.

4. Bearing arrangement (200) according to any of the preceding claims, wherein the bearing gap (156) is configured to be fluidically connected to a water tank (130) in order to provide water for the bearing gap (156).

5. Bearing arrangement (200) according to Claim 4, wherein the water tank (130) has a pump (132) for pumping water from the water tank (130) into the bearing gap (156).

6. Bearing arrangement (200) according to any of the preceding claims, wherein the water-fed hydraulic bearing (120) is a hydrodynamic bearing and is configured to automatically draw in water for the bearing gap (156).

7. Bearing arrangement (200) according to any of the preceding claims, wherein the water flowing out of the bearing arrangement (200) is used to humidify air which is fed to a cathode of a fuel cell system by means of the turbocompressor.

8. Bearing arrangement (200) according to any of the preceding claims, wherein the water flowing out of the bearing arrangement (200) is used to cool components of a fuel cell system.

9. Bearing arrangement (200) according to any of the preceding claims, wherein the water for the hydrodynamic bearing comprises condensed water of a fuel cell system.

10. Use of a bearing arrangement (200) according to any of the preceding claims, for supporting a shaft (118) of a turbocompressor, which is a component of a fuel cell system.

11. Turbocompressor having a bearing arrangement (200) according to Claims 1 to 9, wherein the turbocompressor has a liquid cooling circuit (122), and the water flowing to and/or from the bearing gap (156) is passed through the liquid cooling circuit (122) in order to dissipate heat from the electric machine of the turbocompressor.

12. Cathode circuit of a fuel cell stack having a turbocompressor according to Claim 11, and a humidifier for humidifying the cathode air, wherein the cathode circuit is configured to feed the water flowing out of the bearing arrangement (200) to the humidifier.

## Revendications

1. Agencement de palier (200) pour un arbre (118) d'un turbocompresseur, avec :
au moins un palier hydraulique à eau (120), qui est adapté pour supporter de manière rotative un arbre (118) du turbocompresseur, le palier hydraulique à eau (120) entourant l'arbre (118) sur une circonférence de l'arbre (118) afin former un interstice de palier (156) entre eux ; et le palier hydraulique à eau (120) étant adapté pour permettre à de l'eau de s'écouler à travers l'interstice de palier (156) afin de supporter hydrauliquement par eau l'arbre (118), **caractérisé en ce que** l'agencement de palier présente deux joints d'étanchéité qui sont adaptés pour étanchéifier l'interstice de palier (156) par rapport à l'arbre (118) ; et dans lequel les deux joints d'étanchéité sont sollicités à l'extérieur de l'interstice de palier (156) avec du gaz du turbocompresseur pour étanchéifier le palier (120).

2. Agencement de palier (200) selon la revendication 1, dans lequel le joint d'étanchéité respectif présente deux éléments d'étanchéité (152, 154) qui forment une cavité avec le palier (120) et l'arbre (118) ; et dans lequel le palier (120) présente une ouverture entre les deux éléments d'étanchéité (152, 154) afin de relier fluidiquement la cavité à un réservoir d'eau (130).

3. Agencement de palier (200) selon l'une quelconque des revendications précédentes, dans lequel à l'extérieur des deux joints d'étanchéité est agencé respectivement un joint d'étanchéité au gaz avec un espace intermédiaire par rapport au joint d'étanchéité respectif, lequel est adapté pour étanchéifier l'interstice de palier (156) par rapport à l'arbre (118), et le palier hydraulique à eau (120) est adapté pour solliciter avec le gaz du turbocompresseur le joint d'étanchéité respectif à l'extérieur de l'interstice de palier (156) au moyen de l'espace intermédiaire.

4. Agencement de palier (200) selon l'une quelconque des revendications précédentes, dans lequel l'interstice de palier (156) est adapté pour être relié fluidiquement à un réservoir d'eau (130) afin de fournir de l'eau pour l'interstice de palier (156).

5. Agencement de palier (200) selon la revendication 4, dans lequel le réservoir d'eau (130) présente une pompe (132) afin de pomper de l'eau du réservoir d'eau (130) dans l'interstice de palier (156).

6. Agencement de palier (200) selon l'une quelconque des revendications précédentes, dans lequel le palier hydraulique à eau (120) est un palier hydrodynamique, et est adapté pour aspirer de l'eau pour l'interstice de palier (156) lui-même.

7. Agencement de palier (200) selon l'une quelconque des revendications précédentes, dans lequel l'eau sortant de l'agencement de palier (200) est utilisée pour humidifier l'air qui est amené à une cathode d'un système de piles à combustible au moyen du turbocompresseur.

8. Agencement de palier (200) selon l'une quelconque des revendications précédentes, dans lequel l'eau sortant de l'agencement de palier (200) est utilisée pour refroidir les composants d'un système de piles à combustible.

9. Agencement de palier (200) selon l'une quelconque des revendications précédentes, dans lequel l'eau pour le palier hydrodynamique présente de l'eau condensée d'un système de piles à combustible.

10. Utilisation d'un agencement de palier (200) selon l'une quelconque des revendications précédentes, pour supporter un arbre (118) d'un turbocompresseur qui est un composant d'un système de piles à combustible.

11. Turbocompresseur avec un agencement de palier (200) selon les revendications 1 à 9, le turbocompresseur présentant un circuit de refroidissement par liquide (122), et l'eau entrant et/ou sortant de l'interstice de palier (156) étant dirigée à travers le circuit de refroidissement par liquide (122) afin d'évacuer de la chaleur de la machine électrique du turbocompresseur.

12. Circuit cathodique d'un empilement de piles à combustible avec un turbocompresseur selon la revendication 11, et un humidificateur pour humidifier l'air cathodique, le circuit cathodique étant adapté pour amener l'eau sortant de l'agencement de palier (200) à l'humidificateur.
